# EUROPÄISCHE PATENTANMELDUNG

(11) **EP 4 202 484 A1**
(43) Veröffentlichungstag der Anmeldung: **28.06.2023**
(21) Anmeldenummer: 22213733.3
(22) Anmeldetag: 15.12.2022
(51) Int. Cl.: G01S 7/497, G01S 17/42, G01S 17/87, G01S 17/894, G01S 17/931, H04N 17/00, B66F 9/24, B66F 9/075, B66F 17/00

(54) **VERFAHREN ZUM BESTIMMEN EINER RELATIVEN ANBAUPOSITION EINER ERSTEN SENSOREINHEIT IN BEZUG AUF EINE ZWEITE SENSOREINHEIT AN EINEM FLURFÖRDERZEUG**

(30) Priorität: 22.12.2021 DE 102021134371
(71) Anmelder: Jungheinrich Aktiengesellschaft, 22047 Hamburg (DE)
(72) Erfinder: Bistry, Hannes, 25421 Pinneberg (DE); Bruss, Benjamin, 22177 Hamburg (DE); Renneke, Tilmann, 22880 Wedel (DE)
(74) Vertreter: Herzog, Markus

(57) **Zusammenfassung**

Die vorliegende Erfindung betrifft ein Verfahren zum Bestimmen einer relativen Anbauposition einer ersten Sensoreinheit (12) in Bezug auf eine zweite Sensoreinheit (14) an einem Flurförderzeug (10), welches eine Längsrichtung (L), eine Breitenrichtung (B) und eine Höhenrichtung aufweist, wobei die erste und die zweite Sensoreinheit (12, 14) jeweilige Erfassungsfelder aufweisen und entsprechende Sensordaten liefern, das Verfahren umfassend die Schritte eines Platzierens des Flurförderzeugs (10) bezüglich einer flächigen Struktur (W) in einer ersten Orientierung, einer Detektion der flächigen Struktur (W) durch die beiden Sensoreinheiten (12, 14) und jeweiliges Bestimmen einer Distanz und eines Winkels zwischen der entsprechenden Sensoreinheit (12, 14) und der flächigen Struktur (W) in der ersten Orientierung, eines Platzierens des Flurförderzeugs (10) bezüglich der flächigen Struktur (W) in einer zweiten Orientierung, wobei sich wenigstens der Winkel zwischen der Längsachse (L) des Flurförderzeugs (10) und der flächigen Struktur (W) zwischen der ersten Orientierung und der zweiten Orientierung unterscheidet, einer Detektion der flächigen Struktur (W) durch die beiden Sensoreinheiten (12, 14) und jeweiliges Bestimmen einer Distanz und eines Winkels zwischen der entsprechenden Sensoreinheit (12, 14) und der flächigen Struktur (W) in der zweiten Orientierung und eines Ableitens des Versatzes der ersten und der zweiten Sensoreinheit (12, 14) hinsichtlich der Längsrichtung (L) und Breitenrichtung (B) sowie des Winkels zwischen den beiden Sensoreinheiten bezüglich der Höhenrichtung. Ferner betrifft die Erfindung ein System zum Durchführen eines derartigen Verfahrens.

## Beschreibung

Die vorliegende Erfindung betrifft ein Verfahren zum Bestimmen einer relativen Anbauposition einer ersten Sensoreinheit in Bezug auf eine zweite Sensoreinheit an einem Flurförderzeug sowie ein System zum Durchführen eines derartigen Verfahrens.

Es ist bekannt, Flurförderzeuge und insbesondere fahrerlose Transportsysteme mit einer Mehrzahl von Sensoreinheiten auszustatten, wobei beispielsweise ein Bereich um das Flurförderzeug herum von zwei derartigen Sensoreinheiten auf Hindernisse überwacht werden kann. Insbesondere kann hierbei eine der beiden Sensoreinheiten zum Personenschutz vorgesehen sein und hierzu eine im Wesentlichen horizontale Scan-Ebene knapp oberhalb des Fahruntergrunds aufspannen, während die andere der beiden Sensoreinheiten dem Maschinenschutz dient und beispielsweise durch einen 3D-Flächensensor gebildet sein kann. Auf diese Weise kann durch eine derartige Kombination sichergestellt werden, dass sowohl die gültigen Sicherheitsanforderungen bezüglich des Personenschutzes erfüllt werden, zusätzlich aber auch Hindernisse oberhalb oder unterhalb einer Scanebene von typischen Sensoreinheiten zum Personenschutz erkannt werden können, beispielsweise abgesenkte Lastgabeln von anderen in derselben Logistikumgebung tätigen Flurförderzeugen.

Hierbei ist für eine korrekte Auswertung der Hindernisinformationen erforderlich, die Anbaupositionen der Sensoreinheiten mit hoher Präzision zu kennen. Eine entsprechende Kalibrierung kann beispielsweise durch ein Ausmessen der jeweiligen Anbaupositionen der Sensoreinheiten erfolgen und/oder es können Elemente der Umgebung in den Sensordaten erfasst werden, und basierend auf der Kenntnis der Position dieser Elemente die Positionen und Orientierungen der Sensoreinheiten bestimmt werden. Hierzu sind jedoch oftmals Elemente in der Umgebung des Flurförderzeugs manuell zu platzieren und Messvorgänge mehrfach durchzuführen, so dass derartige Kalibrierungsvorgänge einerseits aufwändig durchzuführen und andererseits auch fehleranfällig sind.

Ferner ist aus dem Stand der Technik bekannt, ein Nachjustieren von Sensorpositionen in einer Parametrisierungssoftware durchzuführen. Insbesondere kann in bekannten Kalibrierungsverfahren eine Eingabe von Anbauparametern einer Sensoreinheit in eine derartige Software erfolgen, wobei sechs Freiheitsgrade einzugeben sind, nämlich drei Raumkoordinaten und drei Winkelkoordinaten. Über eine Darstellung von im Betrieb der Sensoreinheiten aufgenommenen Daten kann anschließend die Güte der Kalibration geprüft werden, beispielsweise kann von einer Bedienperson manuell geprüft werden, ob entsprechende Messpunkte für eine Bodenfläche auch tatsächlich in der Bodenebene liegen. Ebenfalls können Referenzobjekte herangezogen werden, deren Abbildung an einer bestimmten Position erwartet wird.

Weiterhin ist es bekannt, einen 3D-Flächensensor mit einer verfügbaren Algorithmik auf eine Bodenebene zu kalibrieren. Hierbei wird über eine Hauptkomponentenanalyse eine Ebene durch die Bodenpunkte gelegt, die dem Boden zugehörig sind. Auf diese Weise können als extrinsische Kalibrierungsparameter eine Höhe der Sensoreinheit über dem Boden, eine Neigung bzw. ein Nickwinkel und ein Rollwinkel bestimmt werden. Jedoch lassen sich keine Informationen über einen Rotationswinkel um eine vertikale Achse, also einen Gierwinkel, sowie über die beiden verbleibenden kartesischen Koordinaten ableiten.

Ebenfalls ist es aus dem Stand der Technik bekannt, konstruktionsbedingt eine feste Position einer derartigen Sensoreinheit vorgegeben zu haben und entsprechende Kalibrierungsparameter statisch zu setzen.

Zuletzt sind ebenfalls Verfahren bekannt, in welchen beide verfügbaren Sensoreinheiten ein gleiches Objekt in einer Umgebung des Flurförderzeugs oder eine Gruppe von Objekten detektieren und lokalisieren. Hierzu werden häufig Schachbrettmuster oder QR-Codes herangezogen.

Es zeigt sich jedoch in der Praxis, dass die beschriebenen, aus dem Stand der Technik bekannten Kalibrierungsvorgänge zeitaufwändig und fehleranfällig sind. Ebenfalls ist es hierbei noch nicht möglich, verschiedene Sensorsysteme zueinander zu kalibrieren und es kann insbesondere nachteilhaft sein, wenn verwendete Referenzobjekte aufgrund der Anbauposition der beiden Sensoren weit von dem Fahrzeug entfernt sein müssen. Dies kann beispielsweise dann der Fall sein, wenn ein Laserscanner als Personenschutzeinrichtung nahe einer Bodenebene arbeitet, während andererseits eine Time-of-Flight-Kamera als Maschinenschutzeinrichtung an einem erhöhten Bauteil angebracht ist, um auch höhere Hindernisse erfassen zu können. Hierbei führt eine größere Entfernung zu den verwendeten Referenzobjekten automatisch zu einem erhöhten Rauschen und damit einem ausgeprägteren Messfehler.

Ein weiterer Nachteil der beschriebenen Verfahren besteht darin, dass häufig nur drei der sechs oben genannten Kalibrierungsparameter bestimmt werden können und wenigstens einige der Verfahren nur bei Sensoren anwendbar sind, die eine Bodenebene abbilden können, also zum Beispiel nicht die oben genannten Laserscanner, deren Scanebene in der Regel im Wesentlichen parallel zum Fahruntergrund des Flurförderzeugs verläuft.

Weiterhin kann es bei Verfahren aus dem Stand der Technik nachteilhaft sein, dass Toleranzen bei der Fertigung des Flurförderzeugs oder auch bereits Toleranzen bei der Fertigung der Sensoreinheiten einen negativen Einfluss auf die Genauigkeit solcher Verfahren haben können. Des Weiteren ist verfahrensbedingt häufig notwendig, Anbauwinkel der entsprechenden Sensoreinheiten variabel zu halten.

Zuletzt muss bei einigen der aus dem Stand der Technik bekannten Verfahren der Erfassungsbereich der Sensoreinheiten genau übereinstimmen und ein in der Umgebung detektiertes oder lokalisiertes Objekt muss bei einer momentanen Positions- und Rotationsausrichtung der Sensoreinheiten bestimmbar sein. Ferner lassen sich in derartigen Vorgängen unterschiedliche Arten von Sensoren in der Regel nicht behandeln.

Demzufolge ist es die Aufgabe der vorliegenden Erfindung, ein Verfahren zum Bestimmen einer relativen Anbauposition zweier Sensoreinheiten an einem Flurförderzeug bereitzustellen, welche sich beispielsweise hinsichtlich ihres Sensortyps unterscheiden und an dem Flurförderzeug verschiedene Anwendungsbereiche und Erfassungsbereiche abdecken. Ferner wird ein effizientes und präzises Verfahren angestrebt, welches den aus dem Stand der Technik bekannten Verfahren sowohl hinsichtlich Effizienz als auch Präzision überlegen ist.

Zu diesem Zweck wird erfindungsgemäß ein Verfahren zum Bestimmen einer relativen Anbauposition einer ersten Sensoreinheit in Bezug auf eine zweite Sensoreinheit an einem Flurförderzeug vorgeschlagen, welches eine Längsrichtung, eine Breitenrichtung und eine Höhenrichtung aufweist, wobei die erste und die zweite Sensoreinheit jeweilige Erfassungsfelder aufweisen und entsprechende Sensordaten liefern. Hierbei umfasst das Verfahren die Schritte eines Platzierens des Flurförderzeugs bezüglich einer flächigen Struktur in einer ersten Orientierung, eine Detektion der flächigen Struktur durch die beiden Sensoreinheiten und ein jeweiliges Bestimmen einer Distanz zwischen der entsprechenden Sensoreinheit und der flächigen Struktur in der ersten Orientierung, eines Platzierens des Flurförderzeugs bezüglich der flächigen Struktur in einer zweiten Orientierung, wobei sich wenigstens der Winkel zwischen der Längsachse des Flurförderzeugs und der flächigen Struktur zwischen der ersten Orientierung und der zweiten Orientierung unterscheidet, einer Detektion der flächigen Struktur durch die beiden Sensoreinheiten und jeweiliges Bestimmen einer Distanz der entsprechenden Sensoreinheit und der flächigen Struktur in der zweiten Orientierung, ein zusätzliches jeweiliges Bestimmen eines Winkels zwischen der entsprechenden Sensoreinheit und der flächigen Struktur in der ersten Orientierung und/oder der zweiten Orientierung und eines Ableitens des Versatzes der ersten und der zweiten Sensoreinheit hinsichtlich der Längsrichtung und Breitenrichtung sowie des Winkels zwischen den beiden Sensoreinheiten bezüglich einer gleichen Raumachse, insbesondere der Höhenrichtung.

Hierbei sei bereits an dieser Stelle ausdrücklich darauf verwiesen, dass die flächige Struktur auch wenigstens zwei unter einem Winkel zueinander stehende Flächenabschnitte umfassen kann, wobei in diesem Fall die Platzierung des Flurförderzeugs in zwei Orientierungen bezüglich der flächigen Struktur derart zu verstehen ist, dass sich diese beiden Orientierungen jeweils auf die beiden separaten Flächenabschnitte beziehen. Demzufolge können in einer derartigen Ausführungsform der vorliegenden Erfindung die beiden Detektionsschritte in der ersten und der zweiten Orientierung zeitgleich durchgeführt werden, da die beiden Orientierungen stets zeitgleich vorliegen.

Durch das erfindungsgemäße Verfahren können somit drei der sechs notwendigen Kalibrierungsparameter zum Darstellen einer relativen Anbauposition der beiden Sensoreinheiten bestimmt werden und das erfindungsgemäße Verfahren ist für beliebige Typen von Sensoreinheiten geeignet.

Insbesondere kann es sich bei einer aus der ersten und der zweiten Sensoreinheit um einen Laserscanner und bei der anderen Sensoreinheit um einen 3D-Flächenscanner, insbesondere einen Time-of-Flight-Sensor, handeln. Derartige Sensoreinheiten können demzufolge zur Erkennung von Objekten, wie beispielsweise Paletten, Hindernissen, wie beispielsweise Personen und Gegenständen, eine Lokalisierung des Flurförderzeugs, eine Lastvermessung oder auch zur weiteren Informationsgewinnung, wie beispielsweise das Scannen von Codes oder eine Klarschrifterkennung, herangezogen werden.

Erfindungsgemäß können in dem beschriebenen Verfahren die von den Sensoreinheiten gelieferten Sensordaten in ein gemeinsames Koordinatensystem transformiert werden, beispielsweise ein festgelegtes Koordinatensystem des Flurförderzeugs oder auch ein Koordinatensystem von einer der beiden Sensoreinheiten, sodass in einem konkreten Anwendungsfall beispielsweise Hindernisinformationen eines 3D-Flächensensors in das Koordinatensystem eines Laserscanners transformiert und dort mitverarbeitet werden können, um die Komplexität der sicherheitsrelevanten Fahrsteuerung möglichst niedrig zu halten.

Um die Präzision des erfindungsgemäßen Verfahrens weiter zu erhöhen, können die Schritte des Platzierens des Flurförderzeugs bezüglich der flächigen Struktur und die Detektion der flächigen Struktur durch die beiden Sensoreinheiten sowie des jeweiligen Bestimmens einer Distanz und eines Winkels zwischen der Sensoreinheit und der flächigen Struktur mehr als zweimal ausgeführt werden, sodass hier eine Überbestimmung der entsprechenden Parameter bzw. Koordinaten stattfindet.

Allgemein gesprochen kann der Schritt des Ableitens des Versatzes der ersten und der zweiten Sensoreinheit hinsichtlich der Längsrichtung und Breitenrichtung sowie des Winkels zwischen den beiden Sensoreinheiten bezüglich der Höhenrichtung eine Berechnung, insbesondere eine Mittelwertbildung, eine geometrische Rekonstruktion oder ein Ausführen einer Optimierungsfunktion umfassen, wobei insbesondere in Fällen, in welchen das Platzieren und die Detektion wie oben angesprochen mehr als zweimal ausgeführt werden, der Schritt des Ableitens ein Ausführen einer quadratischen Optimierungsfunktion zur Auswertung des überbestimmten Gleichungssystems umfassen kann. Ferner können beispielsweise durch die angesprochene Mittelwertbildung Messungenauigkeiten und mögliche Fehler in einer Kalibrierung der Sensoreinheiten bezogen auf die Bodenebene kompensiert werden.

Weiterhin kann in der ersten Orientierung, der zweiten Orientierung und/oder wenigstens einer weiteren Orientierung die flächige Struktur wenigstens abschnittsweise innerhalb eines Überlappungsbereichs der Erfassungsfelder der beiden Sensoreinheiten liegen. Alternativ ist das erfindungsgemäße Verfahren jedoch auch dann ausführbar, wenn sich die Erfassungsfelder der beiden Sensoreinheiten nicht überlappen und beispielsweise der 3D-Flächensensor einen oberen Teil der flächigen Struktur erfasst und der Laserscanner den unteren Bereich davon scannt.

Das erfindungsgemäße Verfahren kann ferner dadurch vereinfacht werden, dass die flächige Struktur im Wesentlichen vertikal gebildet ist, also beispielsweise als eine Wand ausgeführt ist. In einem solchen Fall ist demzufolge die Ausrichtung der flächigen Struktur bezüglich der Höhenrichtung bekannt, in anderen Fällen einer nicht vertikal gebildeten flächigen Struktur kann der Winkel bezüglich der Vertikalen jedoch auch mittels des 3D-Flächensensors bestimmt werden.

Ebenfalls kann, wie bereits weiter oben angesprochen, eine Vereinfachung des erfindungsgemäßen Verfahrens dadurch erzielt werden, dass die flächige Struktur wenigstens zwei unter einem Winkel zueinander angeordnete Flächenabschnitte umfasst, sodass sie das Platzieren des Flurförderzeugs in der ersten Orientierung vor der flächigen Struktur ebenso wie das Platzieren in der zweiten Orientierung bezüglich der flächigen Struktur sowie die entsprechenden Detektionen der flächigen Struktur in einem einzelnen Schritt stattfinden können, da aufgrund der beiden unter einem Winkel zueinander angeordneten Flächenabschnitten der flächigen Struktur die beiden Orientierungen gegenüber den Flächenabschnitten automatisch eingenommen sind.

Gemäß einem zweiten Aspekt betrifft die vorliegende Erfindung ein System zum Durchführen eines derartigen Verfahrens, umfassend eine Datenverarbeitungseinheit, welche betriebsmäßig mit den beiden Sensoreinheiten gekoppelt und dazu eingerichtet ist, den Schritt des Ableitens anhand der von den Sensoreinheiten gelieferten Sensordaten durchzuführen. Hierbei kann dieses System ferner eine grafische Anzeige oder anderweitige Ausgabemittel zur Bereitstellung der Ergebnisse des Verfahrens und/oder Mittel für eine direkte Kalibration eines Systems umfassen, welches in einem regulären Betrieb des Flurförderzeugs die Daten der beiden Sensoreinheiten verarbeitet.

Weitere Vorteile und Merkmale der vorliegenden Erfindung werden ferner aus der nachfolgenden Beschreibung einer Ausführungsform davon deutlich, wenn diese zusammen mit den beiliegenden Figuren betrachtet wird. Diese zeigen im Einzelnen:
- Figuren 1 und 2: schematische Darstellungen einer Platzierung eines Flurförderzeugs bezüglich einer flächigen Struktur in einer ersten und einer zweiten Orientierung;
- Figur 3: schematische Darstellung des Ableitens des Versatzes zwischen der ersten und der zweiten Sensoreinheit des Flurförderzeugs aus den Figuren 1 und 2;
- Figur 4: schematische Darstellung einer Platzierung eines Flurförderzeugs bezüglich einer flächigen Struktur mit zwei unter einem Winkel zueinander angeordneten Flächenabschnitten; und

- Figur 5: schematische Darstellung eines Beispiels, in welchem ein Winkelversatz zwischen den beiden Sensoreinheiten vorliegt.

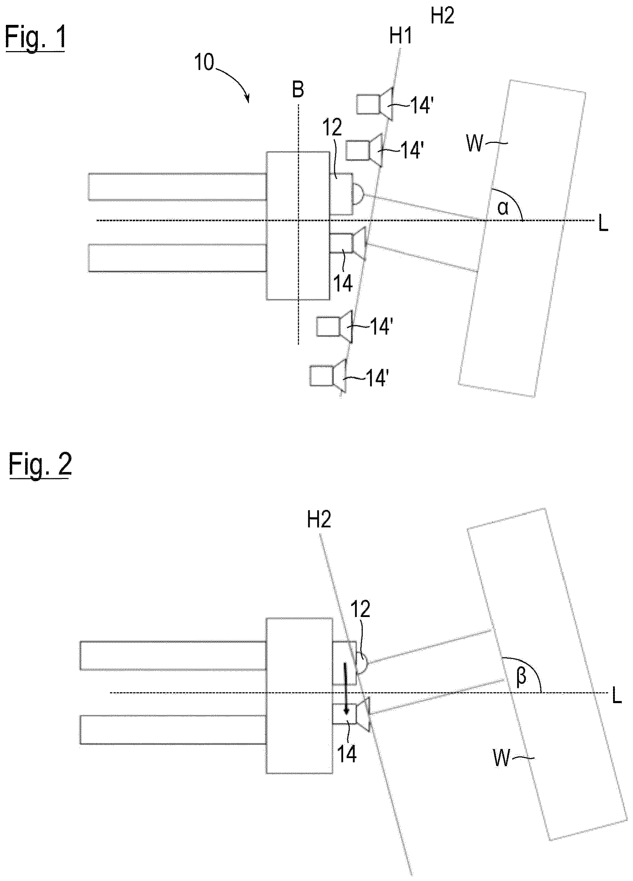

In den Figuren 1 und 2 ist zunächst ein Flurförderzeug 10 mit einer Längsrichtung L, einer Breitenrichtung B und einer nicht dargestellten Höhenrichtung schematisch in einer Draufsicht dargestellt, welches als zwei Sensoreinheiten zum einen einen Laserscanner 12 und zum anderen eine Time-of-Flight-Kamera 14 als 3D-Flächensensor umfasst. Dieses Flurförderzeug 10 ist bezüglich einer flächigen Struktur W unter einem ersten Winkel α in Bezug auf die Längsachse L des Flurförderzeugs 10 angeordnet.

In diesem Zustand detektieren die beiden Sensoreinheiten 12 und 14 die flächige Struktur W hinsichtlich einer jeweiligen Distanz und eines jeweiligen Winkels und es lässt sich ausgehend von dem Laserscanner 12 eine Hilfslinie H1 aus den von den beiden Sensoreinheiten genommenen Daten konstruieren, welche parallel zu der flächigen Struktur W verläuft und auf welcher sich aus Sicht des Laserscanners 12 die Time-of-Flight-Kamera 14 befinden muss. Zur Verdeutlichung dieses Konzepts sind in der Figur 1 ferner mehrere für den Laserscanner plausible Positionen der Time-of-Flight-Kamera eingezeichnet und jeweils mit 14' bezeichnet.

Weiterhin ist in Figur 2 eine zweite Platzierung des Flurförderzeugs 10 bezüglich der flächigen Struktur W dargestellt und der entsprechende Winkel zwischen der flächigen Struktur W und der Längsachse L des Flurförderzeugs 10 durch den Winkel β bezeichnet. Hierdurch ergibt sich durch eine entsprechende Detektion der flächigen Struktur W und Auswertung der Daten der beiden Sensoreinheiten 12 und 14 eine zweite konstruierbare Hilfslinie H2, welche erneut für den Laserscanner 12 plausible Positionen der Time-of-Flight-Kamera 14 andeutet, nachdem eine Bestimmung der flächigen Struktur W in Polarkoordinaten stattgefunden hat.

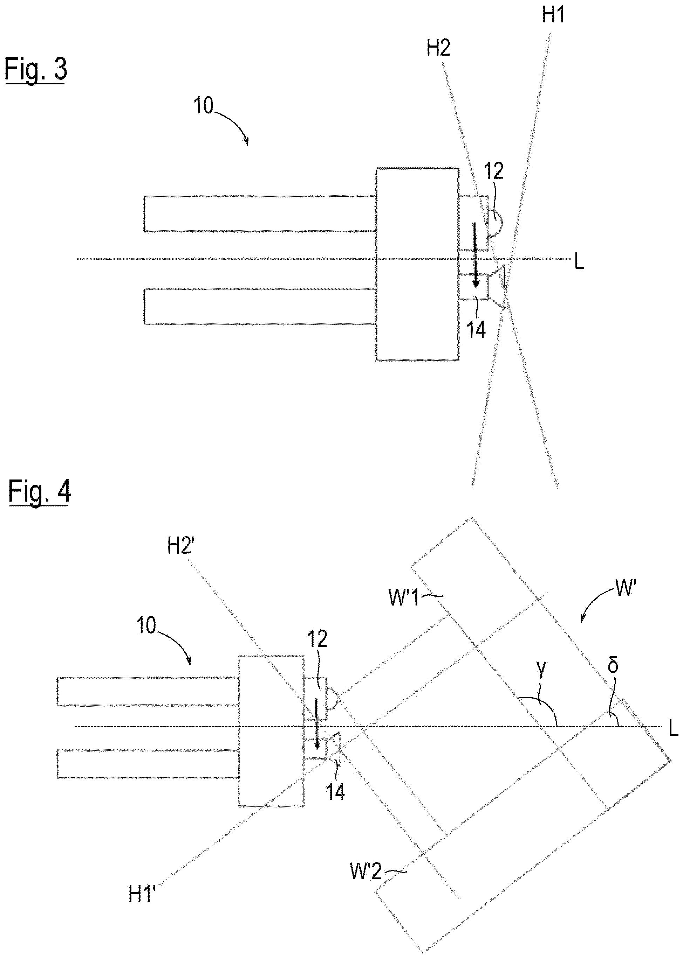

Figur 3 deutet nun an, wie durch eine Konstruktion eines Schnittpunkts der beiden Hilfslinien H1 und H2 die korrekte Position der Time-of-Flight-Kamera 14 bezüglich des Laserscanners 12 bestimmt werden kann, sodass auf Grundlage dieser beiden Erfassungen der flächigen Struktur W eine entsprechende Kalibrierung der beiden Sensoreinheiten 12 und 14 zueinander hinsichtlich der Längsrichtung L, der Breitenrichtung B und eines Winkels bezüglich der Höhenrichtung, also eines Gierwinkels, stattfinden kann.

Weiterhin zeigt Figur 4 in einer ähnlichen schematischen Weise eine alternative Ausführungsform der vorliegenden Erfindung, in welcher eine flächige Struktur W' mit zwei unter einem Winkel zueinander angeordneten Flächenabschnitten W'1 und W'2 zum Einsatz kommt. Hierbei liegen die beiden Flächenabschnitte W'1 und W'2 jeweils unter einem unterschiedlichen Winkel γ beziehungsweise δ zur Längsachse L des Flurförderzeugs 10 vor, sodass die erste und zweite Orientierung des Flurförderzeugs zu der flächigen Struktur gleichzeitig vorliegen und die im Rahmen der Figuren 1 bis 3 beschriebene Vorgehensweise mittels entsprechende Hilfslinien H1' und H2' in einem einzigen Durchgang durchgeführt werden kann.

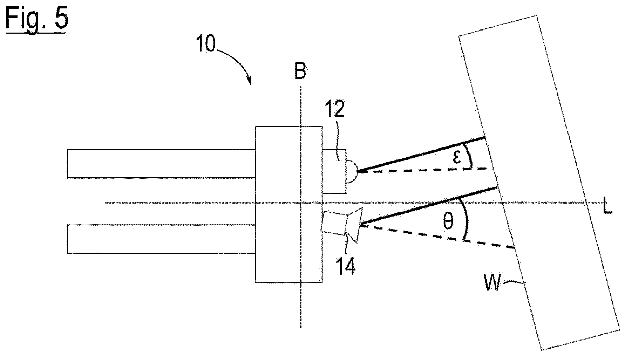

Zuletzt zeigt Figur 5 einen Fall, in welchem eine Abweichung der Winkel der beiden Sensoreinheiten in dem Fahrzeug 10 aus Figur 1 vorliegt. Hierbei weist die vorgesehene Hauptachse des Laserscanners 12 im Wesentlichen in die Richtung der Längsachse L des Fahrzeugs, während die vorgesehene Hauptachse der Time-of-Flight-Kamera 14 um einen gewissen Winkel nach rechts verdreht ist, wie sich aus den beiden gestrichelten Linien in Figur 5 erkennen lässt.

Dementsprechend erfassen die beiden Sensoreinheiten 12 und 14 auch die flächige Struktur W unter unterschiedlichen Winkeln, die in Figur 5 mit ε und θ bezeichnet sind. Liegt demzufolge in der gezeigten Weise eine Winkelabweichung zwischen den beiden Sensoreinheiten 12 und 14 vor, so kann diese bereits bei einer einzelnen Detektion der flächigen Struktur W durch Differenzbildung ε - θ ermittelt und zum Bestimmen der relativen Anbauposition zwischen den beiden Sensoreinheit 12 und 14 weiter verwendet werden bzw. einen Parameter davon darstellen.

## Patentansprüche

1. Verfahren zum Bestimmen einer relativen Anbauposition einer ersten Sensoreinheit (12) in Bezug auf eine zweite Sensoreinheit (14) an einem Flurförderzeug (10), welches eine Längsrichtung (L), eine Breitenrichtung (B) und eine Höhenrichtung aufweist,
wobei die erste und die zweite Sensoreinheit (12, 14) jeweilige Erfassungsfelder aufweisen und entsprechende Sensordaten liefern,
das Verfahren umfassend die Schritte:
a) Platzieren des Flurförderzeugs (10) bezüglich einer flächigen Struktur (W; W`) in einer ersten Orientierung;
b) Detektion der flächigen Struktur (W; W') durch die beiden Sensoreinheiten (12, 14) und jeweiliges Bestimmen einer Distanz zwischen der entsprechenden Sensoreinheit (12, 14) und der flächigen Struktur (W; W') in der ersten Orientierung;
c) Platzieren des Flurförderzeugs (10) bezüglich der flächigen Struktur (W; W`) in einer zweiten Orientierung, wobei sich wenigstens der Winkel (α, β) zwischen der Längsachse (L) des Flurförderzeugs (10) und der flächigen Struktur (W; W') zwischen der ersten Orientierung und der zweiten Orientierung unterscheidet;
d) Detektion der flächigen Struktur (W; W') durch die beiden Sensoreinheiten (12, 14) und jeweiliges Bestimmen einer Distanz zwischen der entsprechenden Sensoreinheit (12, 14) und der flächigen Struktur (W; W') in der zweiten Orientierung;
wobei ferner in Schritt b) und/oder Schritt d) zusätzlich ein jeweiliges Bestimmen eines Winkels zwischen der entsprechenden Sensoreinheit (12, 14) und der flächigen Struktur (W; W') durchgeführt wird; und
e) Ableiten des Versatzes der ersten und der zweiten Sensoreinheit (12, 14) hinsichtlich der Längsrichtung (L) und Breitenrichtung (B) sowie des Winkels zwischen den beiden Sensoreinheiten bezüglich einer gleichen Raumachse, insbesondere der Höhenrichtung.

2. Verfahren nach Anspruch 1,
wobei es sich bei einer aus der ersten und der zweiten Sensoreinheit (12, 14) um einen Laserscanner (12) und bei der anderen Sensoreinheit um einen 3D-Flächensensor (14), insbesondere einen Time-of-Flight-Sensor, handelt.

3. Verfahren nach einem der vorhergehenden Anspruch,
wobei die von den Sensoreinheiten (12, 14) gelieferten Sensordaten in ein gemeinsames Koordinatensystem transformiert werden.

4. Verfahren nach einem der vorhergehenden Ansprüche,
ferner umfassend ein mehrfaches Durchführen der Schritte c) und d) in wenigstens einer weiteren Orientierung.

5. Verfahren nach einem der vorhergehenden Ansprüche,
wobei der Schritt des Ableitens eine Berechnung, insbesondere eine Mittelwertbildung, eine geometrische Rekonstruktion oder ein Ausführen einer Optimierungsfunktion umfasst.

6. Verfahren nach den Ansprüchen 4 und 5,
wobei der Schritt des Ableitens ein Ausführen einer quadratischen Optimierungsfunktion umfasst.

7. Verfahren nach einem der vorhergehenden Ansprüche,
wobei in der ersten Orientierung, der zweiten Orientierung und/oder wenigstens einer weiteren Orientierung die flächigen Struktur (W; W') wenigstens abschnittsweise innerhalb eines Überlappungsbereichs der Erfassungsfelder der beiden Sensoreinheiten (12, 14) liegt.

8. Verfahren nach einem der vorhergehenden Ansprüche, wobei die flächige Struktur (W; W`) im Wesentlichen vertikal gebildet ist.

9. Verfahren nach einem der vorhergehenden Ansprüche,
wobei die flächige Struktur (W') wenigstens zwei unter einem Winkel zueinander angeordnete Flächenabschnitte (W'1, W'2) umfasst.

10. System zum Durchführen eines Verfahrens nach einem der vorhergehenden Ansprüche, umfassend eine Datenverarbeitungseinheit, welche betriebsmäßig mit den beiden Sensoreinheiten (12, 14) gekoppelt und dazu eingerichtet ist, den Schritt des Ableitens anhand der von den Sensoreinheiten (12, 14) gelieferten Sensordaten durchzuführen.
